## Europäisches Patentamt

## European Patent Office

## Office européen des brevets

(19)

(11) Veröffentlichungsnummer: **0 166 017**
**B1**

(12)

# EUROPÄISCHE PATENTSCHRIFT

(45) Veröffentlichungstag der Patentschrift:
**28.01.87**

(51) Int. Cl.⁴: **B 03 B 9/06**

(21) Anmeldenummer: **84107377.8**

(22) Anmeldetag: **27.06.84**

(54) **Vorrichtung zum Zerlegen von Mischstoffen.**

(43) Veröffentlichungstag der Anmeldung:
**02.01.86 Patentblatt 86/1**

(45) Bekanntmachung des Hinweises auf die Patenterteilung:
**28.01.87 Patentblatt 87/5**

(84) Benannte Vertragsstaaten:
**AT BE CH DE FR GB IT LI LU NL SE**

(56) Entgegenhaltungen:
**DE - A - 3 034 451**
**DE - A - 3 124 030**
**FR - A - 524 644**
**FR - A - 533 027**
**US - A - 1 559 938**
**US - A - 2 047 202**
**US - A - 2 057 338**

**PATENTS ABSTRACTS OF JAPAN, Band 6, Nr. 73**
**(C-101)[951], 8. Mai 1982**
**PATENTS ABSTRACTS OF JAPAN, Band 5, Nr. 128**
**(C-67)[800], 18. August 1981**

(73) Patentinhaber: **Stetter GmbH, Neue Welt 2,**
**D-8940 Memmingen (DE)**

(72) Erfinder: **Riker, Rudolf, Potsdamer Strasse 16,**
**D-8940 Memmingen (DE)**

(74) Vertreter: **Hübner, Hans-Jürgen, Dipl.-Ing.,**
**Mozartstrasse 21, D-8960 Kempten (DE)**

# Beschreibung

Die Erfindung betrifft eine Vorrichtung zum Zerlegen von Mischstoffen, wie nicht abgebundenem Beton, in Grob/Fein- und Feinstbestandteile, mit einer drehbar gelagerten, durch äussere Reibrollen motorisch antreibbaren Waschtrommel, in deren vorderen Stirnwand eine Einlassöffnung für den Mischstoff und in deren hinteren Stirnwand eine Auslassöffnung für die Grob/Feinbestandteile vorgesehen ist, einem geneigten, durch die Einlassöffnung in die Waschtrommel hineinführenden Einlassrohr und einer durch die Auslassöffnung aus der Waschtrommel herausführenden Auslasstragorgan, weiterhin mit mindestens einem schraubenförmigen Fördersteg, der am inneren Trommelumfang befestigt ist und bis an eine, im Abstand von der hinteren Stirnwand liegende Querebene heranreicht, zwischen welcher und der hinteren Stirnwand eine Anzahl am inneren Trommelumfang umfangsmässig verteilter Schöpfbecher befestigt ist und mit einem durch die Auslassöffnung in die Waschtrommel hineinführenden Wasserzuführungssystem, das eine Anzahl Austrittsöffnungen aufweist, durch die eine, der durch die Einlassöffnung ausfliessenden, Feinstbestandteile enthaltenden Wassermenge entsprechende Frischwassermenge in die Waschtrommel gelangt, so dass in der Waschtrommel ein konstantes Wasserniveau aufrecht erhalten bleibt.

Eine derartige Vorrichtung ist aus der DE-A-3034451 bekannt. Die Schöpfbecher sind dabei ebene Platten, die sich angenähert radial erstrecken und eine vergleichsweise geringe radiale Länge aufweisen. Unmittelbar unter dem sich in seiner Höchststellung befindlichen Schöpfbecher befindet sich ein Sprühkopf, in dem die Wasseraustrittsöffnungen vorgesehen sind. Die Schöpfbecher sollen mit den austretenden Sprühstrahlen beidseitig abgesprüht werden, um Feststoffteile zu entfernen. Mit den Schöpfbechern können die vom trommelinnenseitigen Fördersteg geförderten Grob- und Feinbestandteile nur unvollkommen gefördert werden, weil ein Teil dieser Festbestandteile die Schurre nicht erreicht, weil diese Bestandteile von den Becherplatten vorher herabfallen. Weiterhin wird in den leicht schräg stehenden Becherplatten Wasser nach oben gefördert und zusammen mit den Festbestandteilen auf eine Schurre geschüttet und schliesslich gelangt ein grosser Teil des Sprühwassers, das zum Absprühen der Becherplatten gedacht ist, ebenfalls auf die Auslassschurre. Auch hat es sich als nicht zufriedenstellend ergeben, dass das herabplätschernde Frischwasser eine Verwirbelung im Wasserinhalt erzeugt, die sich auch noch im Abstand von der Auftreffstelle auswirkt. Dies wiederum hat einen schädlichen Effekt auf den Absetzvorgang der Grob- und Feinbestandteile.

Aufgabe der Erfindung ist es daher, die bekannte Vorrichtung dahingehend zu verbessern, dass eine hochwirksame Entwässerung der Grob- und Feinbestandteile noch innerhalb der Waschtrommel erreicht wird und dass durch Vermeidung von Verwirblungen im Wasserinhalt die austragbare Feststoffmenge pro Zeiteinheit vergrössert wird.

Diese Aufgabe wird erfindungsgemäss dadurch gelöst, dass jeder Schöpfbecher als sich vom inneren Trommelumfang im wesentlichen radial nach innen bis mindestens nahezu auf den Durchmesser der Auslassöffnung erstreckende, in Drehrichtung der Waschtrommeln offene Rinne mit einer Bodenwand und zwei Seitenwänden ausgebildet ist, dass mindestens in einer der Wände Entwässerungsöffnungen vorgesehen sind, die schöpfbecherinnenseitig von Ablenkblechen überlappt sind und dass das Wasserzuführungssystem ein unter dem Wasserniveau liegendes horizontales Verteilrohr aufweist, das längs einer Sehne des vom Trommelumfang bestimmten Kreises angeordnet ist, sich über nahezu die Sehnenlänge erstreckt und in dem die Austrittsöffnungen über die ganze Länge des Verteilrohres verteilt und mindestens überwiegend in der der vorderen Stirnwand der Waschtrommel zugewandten Rohrhälfte angeordnet sind und dass das Auslassorgan in dem innerhalb der Waschtrommel befindlichen Bereich mindestens eine Entwässerungseinrichtung aufweist.

Die Erfindung bringt den Vorteil, dass das Wasser aus den Schöpfbechern abströmen kann, wenn diese während der Trommeldrehung sich noch in geringem Abstand oberhalb des Wasserniveaux befinden, so dass die Wasseroberfläche kaum oder nur wenig gestört wird. Eine anschliessende Entwässerung findet während der weiteren Hochförderung der Schöpfbecher statt, jedoch mit rasch abnehmender Menge pro Zeiteinheit. Ein plötzlicher grosser Wasserschwall, der von grosser Höhe auf den Wasserspiegel trifft, so wie dies nach dem Stand der Technik der Fall war, wird also vermieden. Dank der grossen radialen Länge der Schöpfbecher wird gewährleistet, dass der gesamte Feststoffinhalt jedoch kaum mehr Wasser auf das Austragorgan gelangt. Der Feststoffinhalt gleitet dabei längs der schrägstehenden Schöpfbecher, die geringfügig über dem Austragorgan enden, so dass eine weiche Übergabe erreicht wird, während deren noch Restwasser abtropfen kann. Dank dieser weichen Übergabe können die Grobbestandteile nicht von dem Austragorgan abspringen und in das Wasser zurückfallen. Etwaiges von den Schöpfbechern noch auf das Austragorgan tropfendes Wasser wird durch die in diesem vorgesehenen Entwässerungsöffnungen in die Trommel zurückgeleitet. Dank dieser hochwirksamen Entwässerung können die Grob- und Feinbestandteile fast wasserfrei ausgegeben werden. Da weiterhin das Frischwasserverteilrohr unterhalb des Wasserspiegels angeordnet ist und die Auslassöffnungen gleichmässig so verteilt sind, dass eine möglichst gleichmässige Beaufschlagung des gesamten Wasserquerschnittes erfolgt, wird nicht nur eine Verwirbelung vermieden, sondern eine zusätzliche Beruhigung des Wassers mit geringer axialer Geschwindigkeitskomponente erreicht. Die Feinbestandteile können sich also in der Trommel schneller absetzen und abgesetzte Bestandteile werden im Bereich der Schöpfbecherbewegungsbahn im Wasser nicht mehr aufgewirbelt, so dass sie vollständig von den Schöpfbechern aufgenommen werden können.

Die neue Vorrichtung bildet damit eine kompakte Waschtrommel mit vergleichsweise geringer Grösse, die trotz hoher Kapazität einen niedrigen Trennschnitt zwischen Fein- und Feinststoffen erlaubt.

Gemäss einer Ausführungsform der Erfindung ist mindestens die Bodenwand des Schöpfbechers mit Entwässerungsöffnungen versehen und eine Weiterbildung besteht darin, dass beide Seitenwände des Schöpfbechers ebenfalls mit Entwässerungsöffnungen ausgestattet sind, wobei alle Öffnungen von Ablenkblechen überlappt sind. Vorzugsweise sind die Entwässerungsöffnungen in der oder den Schöpfbecherwänden in Form länglicher Schlitze ausgebildet, die eine Breite im Bereich von 10 bis 30 mm haben, sich im wesentlichen quer zur Längsrichtung der jeweiligen Schöpfbecherwand und im wesentlichen über deren ganze Breite erstrecken. Diese Ausgestaltung fördert die schnelle Entwässerung stark beladener Schöpfbecher.

Die Ablenkbleche sind vorzugsweise so ausgebildet, dass sie mit ihrer Schöpfbecherwand jeweils einen Winkel im Bereich von 15° bis 40° und damit eine schräge Rampe bilden, deren — von der Trommel her gesehen — radial innenliegende Kante im Abstand von der jeweiligen Schöpfbecherwand angeordnet ist. Die Festbestandteile gleiten also bei der schrägstehenden Bodenwand über die Ablenkbleche, können also nicht zu den Auslassöffnungen gelangen, wo hingegen das Wasser wirksam abgeleitet wird.

Eine Ausgestaltung besteht weiterhin darin, dass der Schöpfbecher an der Umfangswand der Waschtrommel im Bereich seiner Bodenwand um eine zur Drehachse zur Waschtrommel parallele Achse schwenkbar gelagert ist und das im Umfangsabstand von der Schwenkachse einstellbare Haltemittel zwischen den Seitenwänden der Schöpfbecher und der Umfangswand der Trommel vorgesehen sind, um den Schöpfbecher in einer von mehreren Schwenkstellungen zu befestigen. Die Neigung der Schöpfbecher kann daher in Abhängigkeit von den Gleiteigenschaften der behandelten Feststoffe so eingestellt werden, dass alle Feststoffe auf die Auslassschurre gelangen.

Vorzugsweise verringert sich die Höhe der Seitenwände radial einwärts von der Umfangswand der Trommel bis zum radial innenliegenden Ende des Schöpfbechers.

Ein wichtiges Merkmal wird weiterhin darin gesehen, dass das Verteilrohr des Wasserzuführungssystems zwischen der Bewegungsbahn der hinteren Seitenwände der Schöpfbecher und der hinteren Stirnwand der Waschtrommel angeordnet ist. Dabei ist die hintere Stirnwand der Waschtrommel vorzugsweise kegelstrumpfförmig ausgebildet und das Verteilrohr ist in dem von der hinteren Stirnwand umgebenen Raum angeordnet. Die Flüssigkeitszufuhr beginnt also unmittelbar benachbart der hinteren Stirnwand der Waschtrommel, so dass auch der Wasserbereich in der Bewegungsbahn der Schöpfbecher mit der gerichteten gleichförmigen Wasserströmung beaufschlagt wird. Zur Erzielung eines möglichst niedrigen Trennschnittes hat sich diese Massnahme als besonders vorteilhaft erwiesen. Die gewünschte Gleichförmigkeit der Wasserbewegung wird gemäss einer Ausgestaltung dadurch erreicht, dass das Verteilrohr mindestens eine obere Reihe und eine untere Reihe von Auslassöffnungen aufweist und dass die Auslassöffnungen einer Reihe gegenüber den Auslassöffnungen der anderen Reihe versetzt angeordnet sind. Die Auslassöffnungen werden vorzugsweise durch Düsen gebildet und die Düsen einer Reihe weisen eine unterschiedliche Neigung zu denjenigen der anderen Düsenreihe auf. All diese Merkmale begünstigen die gleichförmige Beaufschlagung des gesamten Wasserquerschnittes.

Das Austragsorgan besteht aus einer nach unten geneigten Schurre oder einem ansteigenden Förderband und ist für Winterbetrieb beheizbar. Die Schurre ist als Vibrorinne mit einem Entwässerungssieb ausgestaltet. Das Förderband ist im Trommelinneren stirnseitig offen, so dass jegliches Restwasser wirksam in die Waschtrommel zurückgeleitet wird. Im Fall der nach unten geneigten Schurre ist zu diesem Zweck hinter dem Abströmende des Siebes an der Bodenseite der Auslassschurre ein, eine Tropfeinrichtung bildender Abweissteg angeordnet, der sich quer über die gesamte Breite der Auslassschurre erstreckt, wobei die Bodenkante des Abweissteges innerhalb der Waschtrommel mit geringem Abstand von deren Auslassöffnung liegt.

Anhand eines Ausführungsbeispieles sei die Erfindung näher erläutert.

Es zeigt

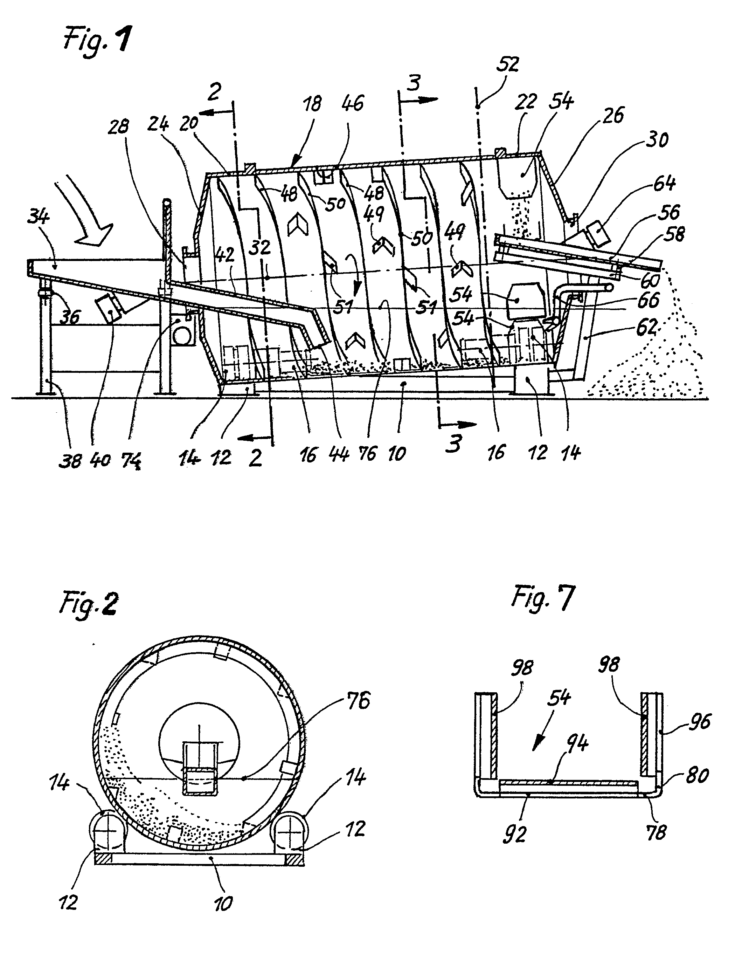

Fig. 1 einen Längsschnitt durch eine Vorrichtung zum Zerlegen von Mischstoffen wie nicht abgebundenem Beton,

Fig. 2 eine Querschnittsansicht längs der Linie 2-2 der Fig. 1,

Fig. 3 eine Querschnittsansicht längs der Linie 3-3 der Fig. 1,

Fig. 4 ein Längsschnitt durch das Auslassende der Waschtrommel in vergrössertem Massstab,

Fig. 5 eine Schnittansicht eines Schöpfbechers längs der Linie 5-5 der Fig. 6

Fig. 6 eine Draufsicht auf den Schöpfbecher gemäss Fig. 5,

Fig. 7 eine Querschnittansicht durch den Schöpfbecher längs der Linie 7-7 der Fig. 5,

Fig. 8 eine Längsschnittansicht durch das Austragende der Waschtrommel mit Veranschaulichung einer Auslaufschurre in grösserem Massstab und

Fig. 9 eine Draufsicht auf die Auslassschurre gemäss Fig. 8.

An den vier Ecken eines länglichen rechteckförmigen Bodenrahmens 10 sind Lagerböcke 12 für jeweils eine drehbar gelagerte Stützrolle vorgesehen. Die beiden Rollen 14 auf einer Seite des Bodenrahmens 10 sind mit Antriebsmotoren 16 gekuppelt. Alle vier Stützrollen 14 stehen in Reibeingriff mit Führungsringen 20, 22 einer Waschtrommel 18, die zwei kegelstumpfförmige Stirnwände 24, 26 und einen dazwischenliegenden zylindrischen Mantel 46 aufweist. Die vordere Stirnwand 24 hat eine kreisförmige Einlassöffnung 28 und die hintere Stirnwand 26 hat eine entsprechende Auslassöffnung 30. Die Drehachse 32 der Waschtrommel 18 ist nach hinten und oben geneigt. Ein Aufgabetrichter 34 ist mittels Vibrationseinrichtungen 36 auf Stützen 38 gelagert, wird von einem Vibrationsmotor 40 angetrieben und weist ein Einlassrohr 42 auf, das sich mit leichter Neigung durch die Einlassöffnung 28 der Waschtrommel 18 in diese hinein erstreckt, wobei die Auslassöffnung 44 des Einlassrohres 42 in einem massgeblichen Abstand von mindestens 15% und höchstens 40% der Waschtrommellänge von der Einlassöffnung 28 entfernt liegt.

Am Innenumfang der zylindrischen Trommelwand 46 sind zwei schraubenförmige Förderstege 48, 50 befestigt, deren Höhe höchstens 5% des Trommeldurchmessers beträgt. Die Auslassöffnung 44 liegt nur geringfügig über den in der untersten Stellung befindlichen Förderstegen 48, 50. An den Vorderflanken der Förderstege 48, 50 sind Mitnehmerbleche 51 und zwischen den Förderstegen sind keilförmige Mitnehmer 49 an der zylindrischen Wand 46 befestigt.

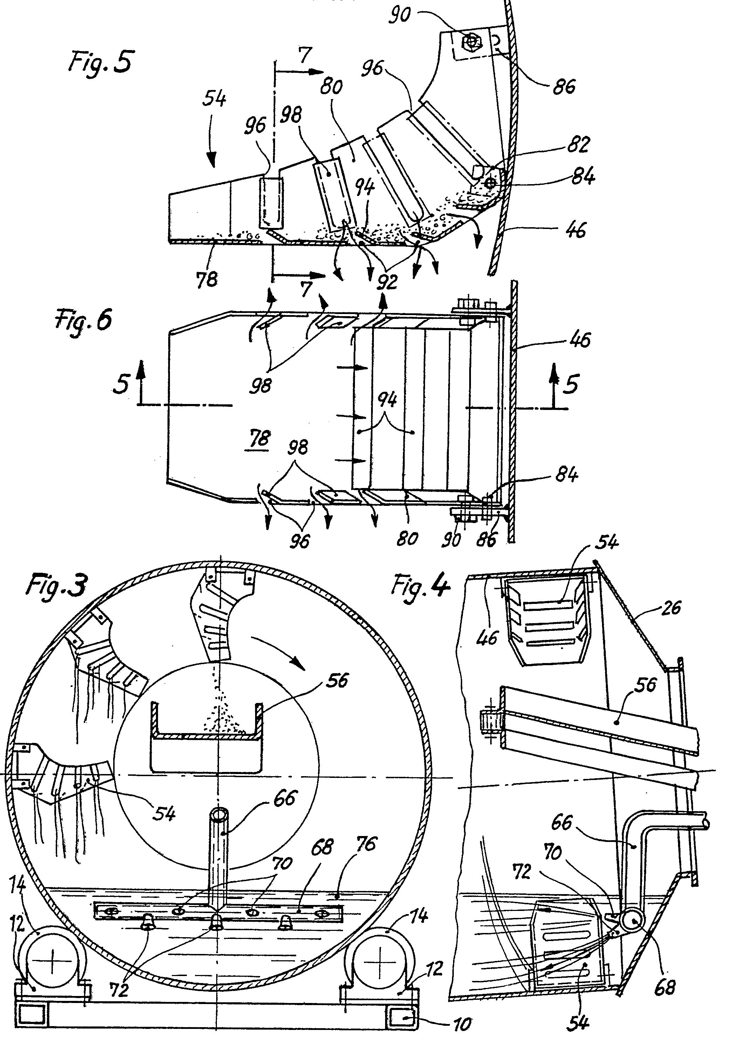

Der Fördersteg 48, 50 endet an einer Querebene 52 im Abstand von der hinteren Stirnwand 26 und zwischen dieser Querebene 52 und der Stirnwand 26 ist an der Trommelwand 46 eine Anzahl Schöpfbecher 54 befestigt, die eine massgebliche Radialerstreckung haben und – wie aus den Figuren 3 und 4 hervorgeht mindestens angenähert an den Durchmesser der Auslassöffnung 30 heranreichen. Eine Auslassschurre 56 beginnt etwa an der genannten Querebene 52 und erstreckt sich durch die Ringbahn der Schöpfbecher 54 und durch die Auslassöffnung 30 nach unten geneigt aus der Trommel 18 heraus. Die Auslassschurre 56 ist bei der Ausführungsform gemäss Fig. 3 zum aufsteigenden Bahnabschnitt der Schöpfbecher 54 hin aus der Mitte versetzt angeordnet, liegt also diesem aufsteigenden Bahnabschnitt näher als dem absteigenden Bahnabschnitt. Die Auslassschurre 56 ist mittels einer Vibrationseinrichtung 58 auf einem bei 62 abgestützten Rahmen 60 gelagert und wird von einem Vibrationsmotor 64 angetrieben.

Ein Frischwasser-Zuführungsrohr 66 ragt von aussen durch die Auslassöffnung 30 in die Waschtrommel 18 hinein und mündet in einem Verteilrohr 68, das im Axialbereich der kegelstumpfförmigen Stirnfläche 26 liegt, horizontal angeordnet ist und sich unterhalb des Wasserspiegels 76 befindet und beidseitig beinahe an die Stirnwand 26 heranreicht. In der der vorderen Stirnwand 24 zugewandten Hälfte hat das Verteilrohr 68 eine obere Reihe von Auslassdüsen 70, die leicht aufwärts gerichtet sind, sowie eine untere Reihe Auslassdüsen 72, die leicht abwärts gerichtet sind, wobei jedoch die Hauptrichtungskomponente beider Düsen 70, 72 axial entgegen der Förderrichtung liegt. Die Düsen 72 sind jeweils in der Mitte zwischen den Düsen 70 angeordnet. Dieser Versatz sorgt dafür, dass der gesamte Querschnittsbereich der Wasserfüllung gleichförmig mit Frischwasser beaufschlagt wird. Das Niveau des Wasserspiegels 46 wird durch den Boden der Einlassöffnung 28 bestimmt, der ein Überlaufwehr bildet, so dass Feinstbestandteile enthaltendes Wasser durch die Einlassöffnung 28 ausgetragen wird und in eine Sammelrinne 74 gelangt, die unterhalb der Einlassöffnung 28 an den Stützen 38 befestigt ist.

Jeder Schöpfbecher 54 besteht aus einer Bodenwand 78 und zwei Seitenwänden 80. Die Bodenwand 78 besteht aus zwei winklig zueinander liegenden Abschnitten und endet an der zylindrischen Trommelwand 46. Der Schöpfbecher 54 bildet somit eine in Drehrichtung der Trommel offene Rinne, wobei sich der radial innenliegende Bodenwandabschnitt etwa radial zur Trommelwand 46 erstreckt. An der Trommelwand befinden sich Laschenpaare 82 für jeden Schöpfbecher 54. Die beiden Laschen 82 jedes Laschenpaares haben einen lichten Abstand gleich der Aussenbreite des Schöpfbechers 54. An den Laschen 82 sind Schwenkbolzen 84 befestigt, die durch Bohrungen in den Seitenwänden 80 dicht benachbart der Bodenwand 78 und in geringem Abstand von der Trommelwand 46 hindurchgreifen. Der Schöpfbecher 54 ist damit um die durch die Schwenkbolzen 84 definierte Schwenkachse schwenkbar gelagert. Im Umfangsabstand von den Laschen 82 ist ein weiteres Laschenpaar 86 befestigt, das die Seitenwände 80 an ihren höchsten, von der Bodenwand 78 am weitesten entfernten Stellen umgreift. Diese Laschen 86 haben zu den Schwenkbolzen 84 konzentrische bogenförmige Schlitze, durch die Schrauben 90 hindurchgreifen, welche entsprechende Löcher in den Seitenwänden 80 durchsetzen. Durch Festziehen der Schrauben können die Schöpfbecher 54 in der gewünschten Neigungsstellung zur Radialrichtung der zylindrischen Trommelwand 46 arretiert werden, um ein sicheres Übergeben des gesamten Schöpfbecherinhaltes in die Auslassschurre 56 zu gewährleisten.

In der Bodenwand 78 sind mehrere, rechtwinklig zur Längserstreckung des Schöpfbechers 54 liegende Entwässerungsschlitze 92 angeordnet, die sich nahezu über die gesamte Breite der Bodenwand 78 erstrecken und selbst eine Breite im Bereich zwischen 10 mm und 30 mm aufweisen. Diese Schlitze 92 sind von Ablenkblechen 94 überlappt, die vorzugsweise in Länge und Breite grösser sind als die Auslassöffnungen 92. Vorzugsweise werden separate Ablenkplatten 94 verwendet, die unter einer Neigung im Bereich zwischen 15° bis 40° an den radial aussenliegenden Begrenzungskanten der Schlitze 92 angeschweisst sind. Die radial innenliegenden Ränder der Ablenkbleche 94 weisen dann einen Abstand von der Bodenwand 78 auf. Auch die Seitenwände 80 sind mit Entwässerungsschlitzen 96 versehen, die von der oberen Kontur der Seitenwände 80 ausgehen und bis nahe an die Bodenwand 78 heranreichen. Die Schlitze 96 haben dieselbe Breite wie die Schlitze 92 und sind ebenfalls von Ablenkblechen 98 überlappt, die wiederum benachbart der radialaussenliegenden Begrenzungskan-

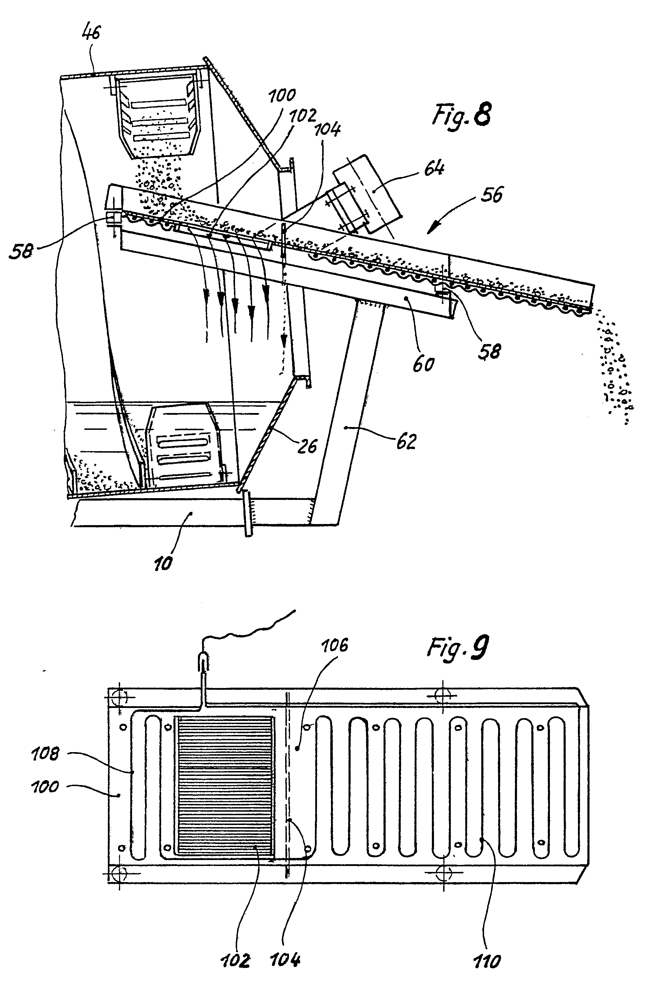

ten der Schlitze 96 angeschweisst sind und sich unter einem Winkel im Bereich zwischen 15° und 40° bezüglich der Seitenwände 80 nach innen erstrecken, so dass die radial innenliegenden Ränder der Ablenkbleche 98 von den Seitenwänden 80 im Abstand liegen. Die von Abdeckblechen 94, 98 voll überlappten Entwässerungsschlitze 92, 96 in der Bodenwand 78 und den Seitenwänden 80 gewährleisten eine schnelle Entwässerung auch eines grösseren Feststoffinhaltes in den Schöpfbechern 54, ohne dass die Feststoffe bei ihrer radial einwärts verlaufenden Gleitbewegung während der Trommeldrehung durch die Entwässerungsschlitze hindurchgelangen können. Auch ist eine Verstopfungsgefahr der Entwässerungsschlitze ausgeschlossen. Wie sich insbesondere aus Fig. 7 ergibt, stehen die Seitenwände 80 auf der Bodenwand 78 senkrecht. Es liegt aber auch im Rahmen der Erfindung die Seitenwände zur Offenseite des Bechers hin divergent anzuordnen.

Die Figuren 8 und 9 zeigen die Auslassschurre 56 mit weiteren Einzelheiten. Der oberste Bereich 100 der Schurre 56 ist undurchlässig ausgebildet und trägt bodenseitig eine Heizung 108. An den Bereich 100 schliesst sich ein durchlässiges Sieb 102 an, das der Restentwässerung der aus den Schöpfbechern 54 aufgeschütteten Grob- und Feinbestandteile dient. Dieses Sieb weist längsverlaufende schmale Spalten mit einer Spaltbreite von nur ungefähr 0,3 mm auf. Benachbart des abströmseitigen Endes des Siebes 102 ist an der Schurre 56 bodenseitig ein Abweissteg 104 angeordnet, der an den Aussenflächen der Seitenwände der Schurre 56 hochgezogen ist. Die Bodenkante des Abweissteges 104 liegt noch innerhalb der Waschtrommel 18 in geringem Abstand von deren Auslassöffnung 30. Der sich an das Sieb 102 in Ausgaberichtung anschliessende undurchlässige Teil 106 der Auslassschurre 56 weist eine weitere Bodenheizung 110 auf. Die Heizungen 108 und 110 bewirken einen weiteren Wasserentzug der Feststoffe und erlauben einen Winterbetrieb, ohne dass ein Einfrieren zu befürchten ist.

Anstelle der nach unten geneigten Schurre 56 kann das Austragorgan auch aus einem in Förderrichtung ansteigenden Förderband bestehen, dessen Rahmen in dem sich die Trommel hineinerstreckenden Bereich die Heizeinrichtung aufweist. Restwasser läuft dann entgegen der Förderrichtung über die trommelinnenseitige Umlenkwalze in die Trommel zurück.

## Patentansprüche

1. Vorrichtung zum Zerlegen von Mischstoffen, wie nicht abgebundenem Beton in Grob/Fein- und Feinstbestandteile, mit einer drehbar gelagerten, durch äussere Reibrollen (14) motorisch antreibbaren Waschtrommel (18), in deren vorderer Stirnwand (24) eine Einlassöffnung (28) für den Mischstoff und in deren hinterer Stirnwand (26) eine Auslassöffnung (30) für die Grob/Feinbestandteile vorgesehen ist, einem geneigten, durch die Einlassöffnung (28) in die Waschtrommel (18) hineinführenden Einlassrohr (42) und einem durch die Auslassöffnung (30) aus der Waschtrommel (18) herausführenden Austragorgan (56), weiterhin mit mindestens einem schraubenförmigen Fördersteg (48, 50), der am inneren Trommelumfang (46) befestigt ist und bis an eine im Abstand von der hinteren Stirnwand (26) liegende Querebene (52) heranreicht, zwischen welcher und der hinteren Stirnwand (26) eine Anzahl am inneren Trommelumfang umfangsmässig verteilter Schöpfbecher (54) befestigt ist und mit einem durch die Auslassöffnung (30) in die Waschtrommel (18) hineinführenden Wasserzuführungssystem (66, 68), das eine Anzahl Austrittsöffnungen (70, 72) aufweist, durch die eine, der durch die Einlassöffnung (28) ausfliessenden, Feinstbestandteile enthaltenden Wassermenge entsprechende Frischwassermenge in die Waschtrommel (18) gelangt, so dass in der Waschtrommel (18) ein konstantes Wasserniveau (76) aufrecht erhalten bleibt, dadurch gekennzeichnet, dass jeder Schöpfbecher (54) als sich vom inneren Trommelumfang (46) im wesentlichen radial nach innen bis mindestens nahezu auf den Durchmesser der Auslassöffnung (30) erstreckende, in Drehrichtung der Waschtrommel (18) offene Rinne mit einer Bodenwand (78) und zwei Seitenwänden (80) ausgebildet ist, dass mindestens in einer der Wände (78, 80) Entwässerungsöffnungen (92, 96) vorgesehen sind, die schöpfbecherinnenseitig von Ablenkblechen (94, 98) überlappt sind und dass das Wasserzuführungssystem (66, 68) ein unter dem Wasserniveau (76) liegendes horizontales Verteilrohr (68) aufweist, das längs einer Sehne des vom Trommelumfang bestimmten Kreises angeordnet ist und sich über nahezu die gesamte Sehnenlänge erstreckt und in dem die Austrittsöffnungen (70, 72) über die ganze Länge des Verteilrohres (68) verteilt und mindestens überwiegend in der der vorderen Stirnwand (24) der Waschtrommel (18) zugewandten Rohrhälfte angeordnet sind, und dass das Austragorgan (56) in dem innerhalb der Waschtrommel (18) befindlichen Bereich mindestens eine Entwässerungseinrichtung (102) aufweist.

2. Vorrichtung nach Anspruch 1, dadurch gekennzeichnet, dass sowohl die Bodenwand (78) als auch die beiden Seitenwände (80) des Schöpfbechers (54) mit Entwässerungsöffnungen (92, 96) versehen sind, die von Ablenkblechen (94, 98) überlappt sind.

3. Vorrichtung nach Anspruch 1 oder 2, dadurch gekennzeichnet, dass die Entwässerungsöffnungen (92, 96) in der oder den Schöpfbecherwänden (78, 80) in Form länglicher Schlitze ausgebildet sind, die eine Breite im Bereich von 10 bis 30 mm haben, sich im wesentlichen quer zur Längsrichtung der jeweiligen Schöpfbecherwand (78, 80) und im wesentlichen über deren ganze Breite erstrecken.

4. Vorrichtung nach einem der Ansprüche 1 bis 3, dadurch gekennzeichnet, dass jedes Ablenkblech (94, 98) mit seiner Schöpfbecherwand (78, 80) einen Winkel im Bereich von 15° bis 40° und damit eine schräge Rampe bildet, deren radial innenliegende Kante im Abstand innerhalb der Schöpfbecherwand (78, 80) angeordnet ist.

5. Vorrichtung nach einem der Ansprüche 1 bis 4, dadurch gekennzeichnet, dass der Schöpfbecher (54) an der Umfangswand (46) der Waschtrommel (18) im Bereich seiner Bodenwand (78) um eine zur Drehachse (32) der Waschtrommel (18) parallele Achse (82) schwenkbar gelagert ist und dass im Umfangsabstand von der Schwenkachse (82) zwischen den Seitenwänden (80) des Schöpfbechers (54) und der Umfangswand (46) der Waschtrommel (18) eine verstellbare Halterung (86, 90) vorgesehen ist, um den Schöpfbecher (54) in einer von mehreren Schwenkstellungen zu befestigen.

6. Vorrichtung nach einem der Ansprüche 1 bis 5, dadurch gekennzeichnet, dass die Höhe der Seitenwände (80) sich radial einwärts von der Umfangswand (46) der Waschtrommel (18) bis zum radial innenliegenden Ende des Schöpfbechers (54) verringert.

7. Vorrichtung nach einem der Ansprüche 1 bis 6, dadurch gekennzeichnet, dass das Verteilrohr (68) des Wasserzuführungssystems (66) zwischen der Bewegungsbahn der hinteren Seitenwände (80) der Schöpfbecher (54) und der hinteren Stirnwand (26) der Waschtrommel (18) angeordnet ist.

8. Vorrichtung nach Anspruch 7, dadurch gekennzeichnet, dass mindestens die hintere Stirnwand (26) der Waschtrommel (18) kegelstumpfförmig ausgebildet ist und das Verteilrohr (68) in dem von dieser hinteren Stirnwand (26) umgebenen Raum angeordnet ist.

9. Vorrichtung nach einem der Ansprüche 1 bis 8, dadurch gekennzeichnet, dass das Verteilrohr (68) mindestens eine obere Reihe und eine untere Reihe von Auslassöffnungen (70, 72) aufweist, und dass zur Erzielung einer über den gesamten Querschnitt im wesentlichen gleichmässigen Beaufschlagung mit Frischwasser die Auslassöffnungen (70) einer Reihe gegenüber den Auslassöffnungen (72) der anderen Reihe versetzt angeordnet sind.

10. Vorrichtung nach Anspruch 9, dadurch gekennzeichnet, dass die Auslassöffnungen (70, 72) durch Düsen gebildet sind und die Düsenachsen einer Reihe eine unterschiedliche Neigung zu denjenigen der anderen Düsenreihe aufweisen.

11. Vorrichtung nach einem der Ansprüche 1 bis 10, dadurch gekennzeichnet, dass das Austragorgan (56) mit einer Heizeinrichtung versehen ist.

12. Vorrichtung nach einem der Ansprüche 1 bis 11, dadurch gekennzeichnet, dass das Austragorgan (56) eine in Förderrichtung nach unten geneigte Schurre ist und die Entwässerungseinrichtung (102) aus einem Sieb besteht, hinter dessen Abströmende an der Bodenseite der Schurre (56) ein, eine Tropfeinrichtung bildender Abweissteg (104) angeordnet ist, der sich quer über die gesamte Breite der Schurre (56) erstreckt und dass die Bodenkante des Abweissteges (104) innerhalb der Waschtrommel (18) in geringem Abstand von deren Auslassöffnung (30) liegt.

13. Vorrichtung nach einem der Ansprüche 1 bis 11, dadurch gekennzeichnet, dass das Austragorgan (56) aus einer in Förderrichtung ansteigenden Förderbandeinrichtung besteht, deren Rahmen in dem in die Waschtrommel (18) hineinreichenden Bereich beheizbar ist.

**Claims**

1. An apparatus for the separation of mixtures as non-cemented concrete in coarse/fine and finest particles comprising a washing drum (18) mounted for rotation and by means of outside friction rollers (14) driven by motor means, an inlet opening (28) for the mixture provided in a front wall (24), a rear wall (26) of the washing drum provided with a discharge opening (30) for the coarse/fine particles, an inclined feeding tube (42) extending through the inlet opening (28) into the washing drum (18), discharge means (56) leading outwards from the washing drum (18) through the discharge opening (30), further comprising at least one helical conveyor web (48, 50) fastened at the inside periphery (46) of the drum and ending at a radial plane (52) spaced from the rear wall (26), a plurality of peripherally spaced buckets (54) fastened at the inside periphery of the drum between said radial plane (52) and the rear wall (26), a water feeding system (66, 68) extending through said discharge opening (30) into the washing drum (18) and provided with a plurality of outlet openings (70, 72) through which an amount of fresh water comes into the washing drum (18) equal with the amount of water containing finest articles and flowing out through the inlet opening (28), so that a constant water level (76) is maintained in the washing drum (18), characterized in that, each bucket (54) is designed in the form of a channel, open in revolving direction of the washing drum (18) substantially extending radially inwards from the inner drum periphery (46) to at least almost the outer diameter of the discharge opening (30) and composed of a bottom wall (78) and a pair of side walls (80), that the draining openings (92, 96) are provided in at least one of the walls (78, 80), which draining openings (78, 80) are overlapped by deflection plates (94, 98) at the inside of the buckets (54) and that the water feeding system (66, 68) comprises a horizontal distributing pipe (68) situated below the water level (76) which is arranged along a chord of the circle defined by the drum periphery and extends over almost the full chord length and in which the outlet openings (70, 72) are arranged, which are distributed along the full length of the distributing pipe (68) and provided in that pipe half facing the front wall (24) of the washing drum (18) and that the discharge means (56) comprises at least one draining device (102) in the area thereof situated within the washing drum (18).

2. An apparatus as claimed in claim 1, characterized in that the bottom wall (78) and the pair of side walls (80) of the bucket (54) are provided with draining openings (92, 96), which are overlapped by deflection plates (94, 98).

3. A device according to claim 1 or 2, characterized in that the draining openings (92, 96) in the wall or walls (78, 80) of the bucket are designed in the form of longitudinal slots having a width in the range of 10 to 30 mm, which substantially extend in crosswise direction with respect to the longitudinal direction of the respective wall (78, 80) of the bucket and run substantially over the whole width thereof.

4. A device according to one of the claims 1 to 3, characterized in that each deflection plate (94, 98) together with its bucket wall (78, 80) forms an angle in the region of 15° to 40° and therefore forms an inclined ramp, the radial inward edge of which spaced from the bucket wall (78, 80) and arranged inside thereof.

5. A device according to one of the claims 1 to 4, characterized in that the bucket (54) in the area of its bottom wall (78) is pivotably mounted at the peripheral wall (46) of the washing drum (18) about an axis (82) which is parallel with axis (32) of the washing drum (18) and that an adjustable holding device (86, 90) is provided between the side walls (80) of the bucket (54) and the peripheral wall (46) of the washing drum (18) with a peripheral space from the pivot axis (82) to fasten the bucket (54) in one of a plurality of pivot positions.

6. A device according to one of the claims 1 to 5, characterized in that the height of the side walls (80) reduces in radial inward direction from the peripheral wall (46) of the washing drum (18) to the radial inward end of the bucket (54).

7. A device according to one of the claims 1 to 6, characterized in that the distributing pipe (68) of the water feeding system (66) is arranged between the moving path of the rear side walls (80) of the buckets (54) and the rear wall (26) of the washing drum (18).

8. A device according to claim 7, characterized in that at least the rearwall (26) of the washing drum (18) is designed in a truncated cone form and the distribution pipe (68) is arranged in the space surrounded by this rear wall (26).

9. A device according to one of the claims 1 to 8, characterized in that the distributing pipe (68) comprises at least an upper row and a lower row of outlet openings (70, 72) and that the outlet openings (70) of one row are offset with respect to the outlet openings (72) of the other row in order to achieve a substantially uniform admission by fresh water over the whole cross-section.

10. A device according to claim 9, characterized in that the outlet openings (70, 72) are formed by nozzles and the nozzle axes of one row have a different inclination with respect to those of the other nozzle row.

11. A device according to one of the claims 1 to 10, characterized in that the discharge device (56) comprises a heating device.

12. A device according to one of the claims 1 to 11, characterized in that the discharge device (56) is a chute downwardly inclined in conveying direction and the draining device (102) consists of a screen, behind the discharge end thereof a deflecting web (104) is arranged which forms a dropping device at the bottom side of the chute (56), the deflecting web extending cross-wise over the whole width of the chute (56) and the bottom edge of the deflecting web (104) is situated within the washing drum (18) with a small space from the discharge opening (30) thereof.

13. A device according to one of the claims 1 to 11, characterized in that the discharge device (56) consists of an conveyor belt device upwardly inclined in conveying direction, the frame of which in the region extending into the washing drum (18) is heatable.

## Revendications

1. Dispositif servant à la décomposition de matières de mélange, telles que du béton non lié, en constituants fins-grossiers et extrêmement fins, et se composant d'un tambour de lavage (18) monté à l'état rotatif, à commander mécaniquement par des rouleaux de friction extérieurs (14) et dans la paroi frontale avant (24) duquel est prévue une ouverture d'entrée (28) pour la matière de mélange et dont la paroi frontale arrière (26) présente une ouverture de sortie (30) pour les constituants fins-grossiers, d'un tube d'entrée (42) incliné, pénétrant dans le tambour de lavage (18) par l'ouverture d'entrée (28) et d'un organe de décharge (56) sortant du tambour de lavage (18) par l'ouverture de sortie (30), en outre, au moins d'une lame de transport hélicoïdale (48, 50) fixée à la face interne (46) du tambour et parvenant jusqu'à un plan transversal (52) se situant à une distance de la paroi frontale arrière (26), plan entre lequel et la paroi frontale arrière (26) sont fixés un nombre de godets de déchargement (54) répartis sur la périphérie du tambour, ainsi que d'un système d'amenée d'eau (66, 68) pénétrant dans le tambour de lavage (18) par l'ouverture de sortie (30) et comportant un nombre d'ouvertures de sortie (70, 72) par lesquelles une quantité d'eau fraîche correspondant à la quantité d'eau contenant les constituants les plus fins et affluant par l'ouverture d'entrée (28) parvient au tambour de lavage (18), si bien qu'un niveau d'eau constant (76) est maintenu dans ce tambour de lavage (18), caractérisé en ce que chaque godet de déchargement (54) est réalisé comme un conduit pourvu d'une paroi de fond (78) et de deux parois latérales (80), ouvert dans le sens de rotation du tambour de lavage (18) et s'étendant depuis la périphérie intérieure (46) du tambour en substance radialement vers l'intérieur jusqu'à proximité au moins du diamètre de l'ouverture de sortie (30) ; en ce qu'on a prévu, au moins dans l'une des parois (78, 80), des ouvertures d'écoulement d'eau (92, 96) recouvertes de chicanes (94, 98) du côté intérieur des godets de déchargement; en ce que le système d'amenée d'eau (66, 68) comprend un tube de répartition (68) horizontal situé en dessous du niveau (76) de l'eau, disposé le long d'une corde du cercle déterminé par la périphérie du tambour, s'étendant presque sur la longueur entière de la corde et dans lequel les ouvertures de sortie (70, 72) sont réparties sur la longueur entière du tube de répartition (68) et sont disposées au moins essentiellement dans la moitié du tube orientée vers la paroi frontale avant (24) du tambour de lavage (18); et en ce que l'organe de décharge (56) comporte, dans la zone se trouvant à l'intérieur du tambour de lavage, au moins un dispositif d'écoulement d'eau (102).

2. Dispositif selon la revendication 1, caractérisé en ce que la paroi de fond (78), de même que les deux parois latérales (80) du godet de déchargement (54) sont munies d'ouvertures d'écoulement d'eau (92, 96) recouvertes de chicanes (94, 98).

3. Dispositif selon l'une quelconque des revendications 1 et 2, caractérisé en ce que les ouvertures d'écoulement d'eau (92, 96) de ou des parois des godets de déchargement (78, 80) sont réalisées sous la forme de fentes oblongues qui ont une largeur de l'ordre de 10 à 30 mm et s'étendent en substance transversalement au sens longitudinal de chaque paroi (78, 80) de godet de déchargement et en substance sur sa largeur entière.

4. Dispositif selon l'une quelconque des revendications 1 à 3, caractérisé en ce que chaque chicane (94, 98) forme, avec sa paroi (78, 80) de godet de déchargement, un angle de l'ordre de 15° à 40° et ainsi une rampe oblique dont le bord intérieur radial est disposé à une distance dans les limites de la paroi (78, 80) du godet de déchargement.

5. Dispositif selon l'une quelconque des revendications 1 à 4, caractérisé en ce que le godet de déchargement (54) pivote sur la paroi périphérique (46) du tambour de lavage (18), dans la zone de sa paroi de fond (78), à l'aide d'un axe (82) parallèle à l'axe de rotation (32) du tambour de lavage (18) et en ce qu'on a prévu, à une distance périphérique de l'axe de pivotement (82), entre les parois latérales (80) du godet de déchargement (54) et la paroi périphérique (46) du tambour de lavage (18), une retenue réglable (86, 90) pour fixer les godets de déchargement dans l'une de plusieurs positions d'orientation.

6. Dispositif selon l'une quelconque des revendications 1 à 5, caractérisé en ce que la hauteur des parois latérales (80) se réduit radialement vers l'intérieur de la paroi périphérique (46) du tambour de lavage (18) jusqu'à l'extrémité radialement intérieure du godet de déchargement (54).

7. Dispositif selon l'une quelconque des revendications 1 à 6, caractérisé en ce que le tube de répartition (68) du système d'amenée d'eau (66) est disposé entre la voie de déplacement des parois latérales arrière (80) des godets de déchargement (54) et la paroi frontale arrière (26) du tambour de lavage (18).

8. Dispositif selon la revendication 7, caractérisé en ce qu'au moins la paroi frontale arrière (26) du tambour de lavage (18) est réalisée en forme de cône tronqué et en ce que le tube de répartition (68) est disposé dans l'espace entouré de cette paroi frontale arrière (26).

9. Dispositif selon l'une quelconque des revendications 1 à 8, caractérisé en ce que le tube de répartition (68) comprend au moins une rangée supérieure et une rangée inférieure d'ouvertures de sortie (70, 72) et en ce que les ouvertures de sortie (70) d'une rangée sont décalées par rapport aux ouvertures de sortie (72) de l'autre rangée en vue d'obtenir une alimentation en eau fraîche en substance régulière sur la section transversale entière.

10. Dispositif selon la revendication 9, caractérisé en ce que les ouvertures de sortie (70, 72) sont formées par des buses et en ce que les axes des buses d'une rangée ont une inclinaison différente de celle de l'autre rangée de buses.

11. Dispositif selon l'une quelconque des revendications 1 à 10, caractérisé en ce que l'organe de décharge (56) est pourvu d'un appareil de chauffage.

12. Dispositif selon l'une quelconque des revendications 1 à 11, caractérisé en ce que l'organe de décharge (56) est une goulotte inclinée vers le bas dans le sens du transport et en ce que le dispositif d'écoulement d'eau (102) se compose d'un tamis, derrière l'extrémité d'évacuation duquel est disposé, sur la face de fond de la goulotte (56), un registre de refus (104) formant un dispositif d'égouttage et s'étendant transversalement sur la largeur entière de la goulotte (56) et en ce que le bord de fond du registre de refus (104) se situe à l'intérieur du tambour de lavage (18) à une courte distance de son ouverture de sortie (30).

13. Dispositif selon l'une quelconque des revendications 1 à 11, caractérisé en ce que l'organe de décharge (56) se compose d'une bande transporteuse s'élevant dans le sens du transport et dont le châssis est chauffable dans la zone pénétrant à l'intérieur du tambour de lavage (18).

**Fig. 1**

**Fig. 2**

**Fig. 7**

0 166 017

Fig. 5

Fig. 6

Fig. 3

Fig. 4

11

Fig. 8

Fig. 9